# EUROPÄISCHE PATENTANMELDUNG

(11) **EP 0 673 606 A1**
(43) Veröffentlichungstag der Anmeldung: **27.09.1995**
(21) Anmeldenummer: 95104043.5
(22) Anmeldetag: 20.03.1995
(51) Int. Cl.: A23L 2/76, A23L 2/54, B01D 19/00, C02F 1/20

(54) **Verfahren und Vorrichtung zur Herstellung von stillen, fruchtsafthaltigen Getränken**

(30) Priorität: 23.03.1994 DE 4410830
(71) Anmelder: Mette, Manfred, Dr.-Ing., D-22145 Hamburg (DE)
(72) Erfinder: Mette, Manfred, Dr.-Ing., D-22145 Hamburg (DE)
(74) Vertreter: Baumann, Horst

(57) **Zusammenfassung**

Es werden stille, fruchtsafthaltige Getränke, insbesondere Fruchtnektare hergestellt durch Mischen von Wasser und Fruchtsaftkonzentrat oder Fruchtsirup, wobei die Komponenten abgemessen, gemischt, gesammelt und dann das Fertigprodukt abgeführt wird.
Dazu wird Wasser im Unterdruckbereich bei P₁ unter 100 mbar bis zu Restgasanteilen von etwa O₂ bis 1 mg/dm³; N₂ bis 1 mg/dm³ und CO₂ bis 3 mg/dm³, insbesondere 2-stufig bei gleichem Entgasungsdruck entgast und dieses entgaste Wasser mit dem Fruchtsaftkonzentrat/Fruchtsirup dosiert gemischt, wobei das Gemisch und das Fruchtsaftkonzentrat bzw. der Fruchtsirup ebenfalls unter Drücken P₂;P₃ kleiner 1 bar stehen und diese Drücke derart geregelt werden, daß nur geringe Massen an Aromastoffen bei vorgegebenen Grenzwerten des Restgasgehaltes im Gemisch entzogen werden. Bei der neuen Herstellung von stillen, fruchtsafthaltigen Getränken, durch Mischen von Wasser und Fruchtsaftkonzentrat bzw. Fruchtsirup soll die qualitätsmindernden Beeinflussung des Fertiggetränkes durch Gase verhindert und Aromaverluste minimiert werden.

## Beschreibung

Die Erfindung betrifft ein Verfahren und eine Vorrichtung zur Herstellung von stillen, fruchtsafthaltigen Getränken entsprechend den Oberbegriffen der Ansprüche 1 und 6.

Bekannt ist bei einem Verfahren zum Dosieren, Mischen und Imprägnieren von Flüssigkeiten (DE 15 57 161), daß der Mischvorgang in einem Mischbehälter periodisch erfolgt. Dabei strömt in einen leeren Mischbehälter nach einem Steuerungsimpuls und Öffnen einer Membrandichtung Konzentrat, beispielsweise in Form von dosierfertigen Sirup in den Mischbehälter, bis die Füllhöhe erreicht ist, bei welcher ein Magnetschwimmer einen Schalter betätigt. Diese Füllhöhe entspricht einem bestimmten vorgewählten Mischungsverhältnis. Die Membrandichtung schließt jetzt den Zufluß und durch Öffnen einer anderen Membrandichtung strömt Wasser von unten durch das Konzentrat, mischt sich mit diesem und steigt bis zu einem vorgegebenen Niveau , durch welches wieder ein Schalter betätigt wird, der diese Membrandichtung absperrt. Während des Hochsteigens der Flüssigkeit im Mischbehälter wird die Luft aus diesem durch einen Stutzen herausgedrückt.
Bei diesem Verfahren zum Dosieren, Mischen und Imprägnieren wird das Getränk kalt hergestellt und abgefüllt. Die Verfahrensschritte zur Herstellung erfolgen unter einem Überdruck. Eine Imprägnierung ist jedoch bei einer Herstellung von stillen Fruchtsaftgettränken nicht zulässig.

Allgemein bekannt ist es deshalb auch, stille, fruchtsafthaltige Getränke aus wenigstens zwei flüssigen Komponenten in einfacher Weise zu dosieren und zu mischen und dieses Gemisch heiß abzufüllen. Bei dieser Verfahrensweise sind aufwendige technische Apparaturen notwendig und durch die Heißabfüllung gehen flüchtige Aromastoffe verloren.

Um eine vorteilhaftere Entlüftung und/oder Karbonisierung zu erreichen ist es bekannt, (DD 211 489) in Kesseln Einbauten anzubringen. So ist z.B. in einem Kessel koaxial eine einen Überlauf aufweisende Rohrsäule angeordnet, wobei oberhalb der Rohrsäule ein Zwischendom in Form einer kegelförmigen Abdeckung angeordnet ist. Seitlich von dieser Rohrsäule sind kaskadenförmig angebrachte Leitbleche vorgesehen.

Die Aufgabe der Erfindung besteht darin, stille, fruchtsafthaltige Getränke, durch Mischen von Wasser und Fruchtsaftkonzentrat bzw. Fruchtsirup bei Verhinderung der qualitätsmindernden Beeinflussung des Fertiggetränkes durch Gase und bei Minimierung von Aromaverlusten herzustellen.

Erfindungsgemäß wird die Aufgabe gemäß den in den Kennzeichen der Ansprüche 1 und 6 angegebenen Merkmalen gelöst. Weitere günstige Ausgestaltungen sind in den Unteransprüchen beschrieben.

Der Vorteil der erfindungsgemäßen Lösung besteht im wesentlichen darin, daß die zur Herstellung eines Fruchtsaftgetränkes zu mischenden Komponenten und das Gemisch entgast werden. Die Entgasung des Wassers erfolgt so weit wie ökonomisch möglich. Die Entgasung des Fruchtsaftkonzentrates bzw. des Fruchtsirups und des Gemisches erfolgt nur soweit wie unbedingt notwendig. Damit wird gewährleistet, daß die Aromastoffe weitgehenst erhalten bleiben. Um diesen Aromaverlust weiterhin zu senken, werden die bei der Entgasung frei gewordenen flüchtigen Aromastoffe dem entgasten Wasser wieder zugeführt. Weiterhin ist vorteilhaft, daß durch die Umwälzung ein Homogenisieren des Gemisches erfolgt.

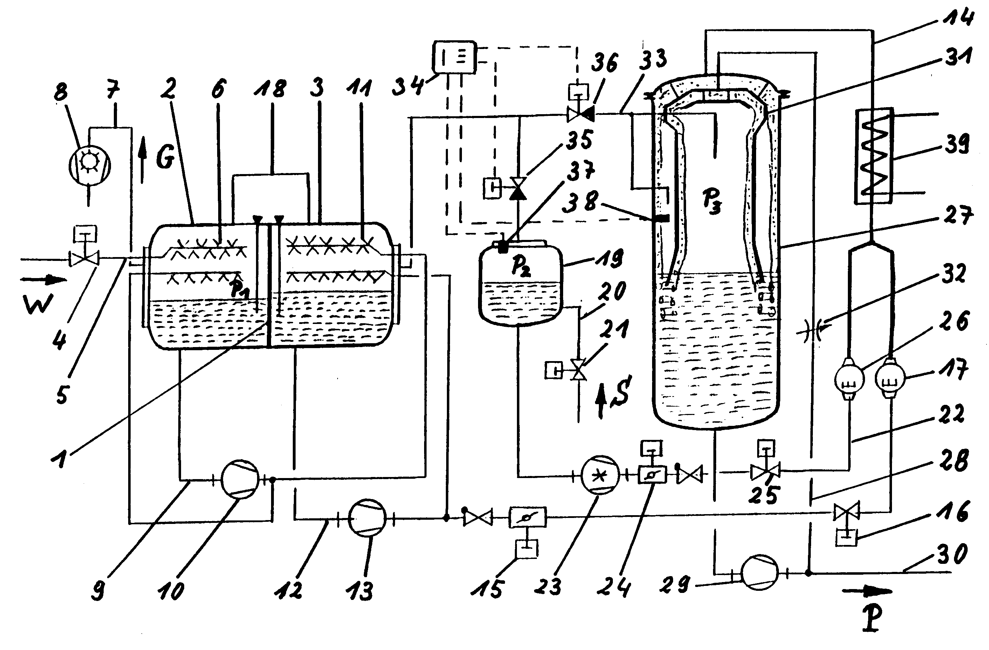

Anhand eines Ausführungsbeispieles soll die Erfindung näher erläutert werden.
Die Figur zeigt eine schematisierte Vorrichtung zur Herstellung von stillen, fruchtsafthaltigen Getränken.

Verfahrensgemäß wird das Getränk aus Wasser und Fruchtsaftkonzentrat oder Fruchtsirup hergestellt. Das Getränk ist nicht mit CO₂ versetzt, d.h. es ist ein stilles Getränk. Zur Verhinderung einer qualitätsmindernden Beeinflussung des Getränkes durch Gase und zur Minimierung von Aromaverlusten werden die zu mischenden Komponenten und das Fertiggetränk im Unterdruckbereich entgast. Die Entgasung des Wassers erfolgt 2-stufig bei gleichem Entgasungsdruck von P₁ unter 100 mbar bis zu Restgasanteilen von etwa O₂ bis 1 mg/dm³; N₂ bis 1 mg/dm³ und CO₂ bis 3 mg/dm³. Dieses entgaste Wasser wird mit Fruchtsaftkonzentrat oder mit Fruchtsirup gemischt. Beide Komponenten werden vor dem Mischvorgang im Durchflußverfahren dosiert. Das Gemisch wird gesammelt. Das Fruchtsaftkonzentrat oder der Fruchtsirup wie auch das Gemisch werden gleichermaßen entgast. Diese Entgasung findet ebenfalls bei Drücken P₂;P₃ kleiner 1 bar statt. Diese Drücke werden derart geregelt, daß nur geringe Massen an Aromastoffen bei vorgegebenen Grenzwerten des Restgasgehaltes im Gemisch entzogen werden. Die Ermittlung der Drücke erfolgt durch Drucksensoren. Die Drücke P₁;P₂ und P₃ werden auf vorgegebene Sollwerte eingeregelt. Die Entgasung der Komponenten und ein Homogenisieren des Fertiggetränkes nach dem dosierten Mischen erfolgt in einem mehrfachen Umlauf. Die durch das Entgasen des Fruchtsaftkonzentrates bzw. des Fruchtsirups und des Fertiggetränkes entzogenen flüchtigen Aromastoffe werden dem entgasten Wasser wieder zugeführt. Zur Haltbarmachung des Gemisches wird dieses nach dem Mischvorgang und vor der Gemischentgasung einer sterilisierenden Wärmebehandlung unterzogen. Es wird nach der Wärmebehandlung wieder rückgekühlt. Das fertige Getränk wird gesammelt und einer Abfüllung ebenfalls im Unterdruckbereich zugeführt.

Die Vorrichtung zur Herstellung von stillen, fruchtsafthaltigen Getränken besteht aus einem liegenden Wasserentgasungsbehälter, der durch eine radiale Trennwand 1 zur 2-stufigen Entgasung in zwei Wasserentgasungsbehälter 2;3 unterteilt ist. Im ersten Wasserentgasungsbehälter 2 mündet eine durch ein Ventil 4 absperrbare Wasserzulaufleitung 5, die im Wasserentgasungsbehälter 2 in einer Versprüheinrichtung 6 endet. Zur Erzeugung eines Unterdruckes und zur Abführung von Gasen (G) ist dieser Wasserentgasungsbehälter 2 durch eine Abgasleitung 7 mit einer Vakuumpumpe 8 verbunden. Im Boden des Wasserentgasungsbehälters 2 beginnt eine Wasserleitung 9, in der eine Pumpe 10 angeordnet ist. Diese Wasserleitung 9 mündet einerseits im Wasserentgasungsbehälter 3 in einer Versprüheinrichtung 11 und andererseits ist sie zum Wasserentgasungsbehälter 2 rückgeführt. Im Boden des Wasserentgasungsbehälters 3 beginnt die Wasserleitung 12, in der die Pumpe 13 angeordnet ist. Diese Wasserleitunng 12 mündet einerseits in einer Gemischleitung 14 und andererseits ist sie zum Wasserentgasungsbehälter 3 rückgeführt. In der Wasserleitung 12 ist noch eine Drossel 15, ein Absperrventil 16 und eine Durchflußmeßeinrichtung 17 angeordnet. Beide Wasserentgasungsbehälter 2;3 sind gasseitig durch eine Leitung 18 verbunden. In einen Behälter 19 für z.B. Fruchtsirup (S) mündet eine Zulaufleitung 20 mit Absperrventil 21. Im Boden des Behälters 19 beginnt eine Fruchtsirupleitung 22, in der die Pumpe 23 angeordnet ist. Diese Fruchtsirupleitung 22 besitzt eine Drossel 24, ein Absperrventil 25 und eine Durchflußmeßeinrichtung 26 und sie mündet in der Gemischleitung 14. Die Gemischleitung 14 steht mit dem Dom eines Gemischbehälters 27 in Verbindung. Im Boden des Gemischbehälters 27 beginnt eine Gemischumwälzleitung 28 mit Pumpe 29, die einerseits in eine Produktablaßleitung 30 und andererseits wiederum im Gemischbehälter 27 oberhalb eines Ablaufbleches 31 endet. Das Ablaufblech 31 ist oben doppelt ausgebildet und erstreckt sich rotationssymetrisch nach unten bis in das Gemisch. In der Gemischumwälzleitung 28 ist eine Drosseleinrichtung 32 eingebaut. Der Wasserentgasungsbehälter 3, der Behälter 19 und der Gemischbehälter 27 sind durch eine Gasleitung 33 miteinander verbunden. In dieser Gasleitung 33 sind über einen Regler 34 angesteuerte schaltbare Ventile 35;36 angeordnet. Der Regler 34 steht mit Drucksensoren 37;38 in Verbindung, die sich im Behälter 19 und und im Gemischbehälter 27 befinden. Zur Sterilisierung des Gemisches ist in der Gemischleitung 14 ein Produkterhitzer 39 mit Temperaturhaltezone und Rückkühleinrichtung vorgesehen.

Die Wirkungsweise ist folgende:
Mit der Vorrichtung sollen stille, fruchtsafthaltige Getränke durch Mischen von Wasser und Fruchtsaftkonzentrat bzw. Fruchtsirup hergestellt werden. Dabei ist die qualitätsmindernde Beeinflussung des Getränkes durch Gase zu verhindern und Aromaverluste sind zu minimieren. Die gelösten Gasanteile im Getränk sind demzufolge so gering wie möglich zu halten. Dazu werden die zu mischenden Komponenten vor dem Mischvorgang und das Gemisch entgast. Das Wasser wird durch die Wasserzulaufleitung 5 einem Wasserentgasungsbehälter 2 zugeführt und dort versprüht. Der Wasserentgasungsbehälter 2 steht unter einem Druck P₁ von unter 100 mbar. Dieser Unterdruck wird durch die Vakuumpumpe 8 realisiert. Vom Wasserentgasungsbehälter 2 wird das Wasser durch die Wasserleitung 9 mit Pumpe 10 in den weiteren Wasserentgasungsbehälter 3 gefördert und dort wiederum versprüht. In beiden Wasserentgasungsbehältern 2;3 ist durch die gasseitig vorhandene verbindende Leitung 18 der gleiche Unterdruck vorhanden. Die Entgasung des Wassers findet in den beiden Wasserentgasungsbehältern 2;3 zweistufig bei gleichem Entgasungsdruck statt, wobei bis zu Restgasanteilen von etwa O₂ bis 1 mg/dm³; N₂ bis 1 mg/dm³ und CO₂ bis 3 mg/dm³ entgast wird. Das entbundene Gas G wird durch die Abgasleitung 7 abgeführt. Ist das Absperrventil 16 geschlossen oder ist der Wasserstrom gedrosselt, erfolgt die Entlüftung im Umlauf. Durch die Wasserleitung 12 mit Pumpe 13 wird das entlüftete Wasser über die Durchflußmeßeinrichtung 17 einer Gemischleitung 14 zugeführt. Der dem entlüfteten Wasser beispielsweise zuzumischende Fruchtsirup S befindet sich im Behälter 19. Dort wird der Fruchtsirup S entlüftet und durch die Fruchtsirupleitung 22 mit Pumpe 23 und Durchflußmeßeinrichtung 26 ebenfalls wie das entlüftete Wasser der Gemischleitung 14 dosiert zugeführt. Durch die Gemischleitung 14 gelangt das Getränkegemisch in den Gemischbehälter 27. Es wird durch das Ablaufblech 31 an die Innenseite des Gemischbehälters 27 geleitet und sammelt sich im unteren Teil des Gemischbehälters 27. Durch die Pumpe 29 wird das Gemisch über die Gemischumwälzleitung 28 entsprechend der Einstellung der Drosseleinrichtung 32 mehrfach dem Gemischbehälter 27 wieder zugeführt. Da die Gemischumwälzleitung 28 unterhalb des Ablaufbleches 31 im Gemischbehälter 27 jedoch oberhalb eines weiteren Teiles des doppelten Abdeckbleches 31 mündet, gelangt das Gemisch an der Innenseite des rotationssymetrischen Teiles des Ablaufbleches 31 nach unten. Dabei wird es entgast und homogenisiert. Es sammelt sich wiederum im Gemischbehälter 27. Von dort aus wird das fertige Produkt P durch die Pumpe 29 über die Produktablaßleitung z.B. einer Füllmaschine zugeführt. Der Behälter 19 und der Gemischbehälter 27 sind durch die Gasleitung 33 miteinander und mit dem Wasserentgasungsbehälter 3 verbunden. Durch diese Gasleitung 33 wird im Behälter 19 und im Gemischbehälter 27 ein Druck kleiner 1 bar hergestellt, um den Fruchtsirup und das Gemisch zu entgasen. Die Drücke P₂ und P₃ werden derart geregelt, daß eine optimale Entgasung vorhanden ist, aber nur geringe Massen an Aromastoffen bei vorgegebenen Grenzwerten des Restgasgehaltes im Gemisch entzogen werden. Die Regelung der Drücke P₂ und P₃ erfolgt über einen Regler 34 durch angesteuerte, schaltbare Ventile 35;36. Diese Öffnen nur, wenn die Sensoren 37;38 signalisieren, daß die vorgegebenen Druckwerte/Gasgehalte überschritten werden. Nur in diesen Fällen können Gase aus dem Gemischbehälter 27 entweichen. Der Regler 34 steht mit den Drucksensoren 37;38, die sich im Behälter 19 bzw. im Gemischbehälter 27 befinden in Verbindung. Zur Haltbarmachung des Gemisches wird dieses in einem Produkterhitzer 39 mit Temperaturhaltezone und Rückkühleinrichtung sterilisiert. Der Produkterhitzer befindet sich in der Gemischleitung 14.

### Aufstellung der Bezugszeichen

- 1: Trennwand
- 2: Wasserentgasungsbehälter
- 3: Wasserentgasungsbehälter
- 4: Ventil
- 5: Wasserzulaufleitung
- 6: Versprüheinrichtung
- 7: Abgasleitung
- 8: Vakuumpumpe
- 9: Wasserleitung
- 10: Pumpe
- 11: Versprüheinrichtung
- 12: Wasserleitung
- 13: Pumpe
- 14: Gemischleitung
- 15: Drossel
- 16: Absperrventil
- 17: Durchflußmeßeinrichtung
- 18: Leitung
- 19: Behälter
- 20: Zulaufleitung
- 21: Absperrventil
- 22: Fruchtsirupleitung
- 23: Pumpe
- 24: Drossel
- 25: Absperrventil
- 26: Durchflußmeßeinrichtung
- 27: Gemischbehälter
- 28: Gemischumwälzleitung
- 29: Pumpe
- 30: Produktablaßleitung
- 31: Ablaufblech
- 32: Drosseleinrichtung
- 33: Gasleitung
- 34: Regler
- 35: Ventil
- 36: Ventil
- 37: Drucksensor
- 38: Drucksensor
- 39: Produkterhitzer

## Patentansprüche

1. Verfahren zur Herstellung von stillen, fruchtsafthaltigen Getränken, insbesondere Fruchtnektare durch Mischen von Wasser und Fruchtsaftkonzentrat oder Fruchtsirup, wobei die Komponenten abgemessen, gemischt, gesammelt und dann das Fertigprodukt abgeführt wird, dadurch gekennzeichnet, daß das Wasser im Unterdruckbereich bei P₁ unter 100 mbar bis zu Restgasanteilen von etwa O₂ bis 1 mg/dm³; N₂ bis 1 mg/dm³ und CO₂ bis 3 mg/dm³, insbesondere 2-stufig bei gleichem Entgasungsdruck entgast, dieses entgaste Wasser mit dem Fruchtsaftkonzentrat/Fruchtsirup dosiert gemischt wird, wobei sich das Gemisch und das Fruchtsaftkonzentrat bzw. der Fruchtsirup ebenfalls unter Drücken P₂;P₃ kleiner 1 bar stehen und diese Drücke derart geregelt werden, daß nur geringe Massen an Aromastoffen bei vorgegebenen Grenzwerten des Restgasgehaltes im Gemisch entzogen werden.

2. Verfahren nach Anspruch 1, dadurch gekennzeichnet, daß nach dem dosierten Mischen das Fertiggetränk in mehrfachen Umlauf entgast und homogenisiert wird.

3. Verfahren nach Anspruch 1 und 2, dadurch gekennzeichnet, daß nach dem Mischvorgang und vor der Gemischentgasung das Gemisch einer Wärmebehandlung zur Haltbarmachung unterzogen wird.

4. Verfahren nach Anspruch 1 bis 3, dadurch gekennzeichnet, daß das Gemisch nach der Wärmebehandlung rückgekühlt wird.

5. Verfahren nach Anspruch 1 bis 4, dadurch gekennzeichnet, daß die dem Fertiggetränk bei der Entgasung entzogenen flüchtigen Aromastoffe dem entgasten Wasser zugeführt werden.

6. Vorrichtung zur Herstellung von stillen, fruchtsafthaltigen Getränken, insbesondere Fruchtnektare durch Mischen von Wasser und Fruchtsaftkonzentrat oder Fruchtsirup, bei der Wasserentgasungsbehälter, ein Behälter für Fruchtsaftkonzentrat/Fruchtsirup und ein Gemischbehälter über Leitungen mit Pumpen, Ventilen, Meßeinrichtungen sowie Dosier- und Mischeinrichtungen untereinander in Verbindung stehen und der Gemischbehälter mit Einbauten versehen ist und eine Produktablaßleitung besitzt, dadurch gekennzeichnet, daß zum Zwecke der Verhinderung der qualitätsmindernden Beeinflussung des Fertiggetränkes durch Gase und zur Minimierung von Aromaverlusten eine Gasleitung (33) zwischen Gemischbehälter (27), Behälter (19) für Fruchtsaftkonzentrat/ Fruchtsirup und Wasserentgasungsbehälter (2;3) vorhanden ist, in der in den Leitungsteilen zum Behälter (19) für Fruchtsaftkonzentrat/Fruchtsirup und Gemischbehälter (27) schaltbare Ventile (35;36) angeordnet sind, die mit das Über- oder Unterschreiten von eingestellten Druckschwellwerten signalisierenden Drucksensoren (37;38) im Behälter (19) für Fruchtsaftkonzentrat/Fruchtsirup und im Gemischbehälter (27) in Verbindung stehen.

7. Vorrichtung nach Anspruch 6, dadurch gekennzeichnet, daß die schaltbaren Ventile (35;36) mit einer das Über- oder Unterschreiten eines eingestellten Schwellwertes signalisierenden in der Fertigproduktablaßleitung angeordneten Gasmeßeinrichtung zur Messung von Mengen an Gas im Fertigprodukt in Verbindung stehen.

8. Vorrichtung nach Anspruch 6 und 7, dadurch gekennzeichnet, daß am Gemischbehälter (27) eine gesteuert ein- und ausschaltende separate Vakuumpumpe angeordnet ist.

9. Vorrichtung nach Anspruch 6 bis 8, dadurch gekennzeichnet, daß im Gemischbehälter (27) wenigstens ein im Dom des Gemischbehälters (27) beginnendes sich nach unten bis in das Fertiggetränk erstreckendes Ablaufblech (31) angeordnet ist.

10. Vorrichtung nach Anspruch 6 bis 9, dadurch gekennzeichnet, daß in der Gemischleitung (14) ein Produkterhitzer (339) mit Temperaturhaltezone angeordnet ist.

11. Vorrichtung nach Anspruch 6 bis 10, dadurch gekennzeichnet, daß dem Produkterhitzer (39) eine Rückkühleinrichtung nachgeordnet ist.
